(19) Europäisches Patentamt
European Patent Office
Office européen des brevets

(11) **EP 4 575 463 B1**

(12) **FASCICULE DE BREVET EUROPEEN**

(45) Date de publication et mention
de la délivrance du brevet:
**15.04.2026 Bulletin 2026/16**

(21) Numéro de dépôt: **24219906.5**

(22) Date de dépôt: **13.12.2024**

(51) Classification Internationale des Brevets (IPC):
***G01N 21/41*** *(2006.01)* ***G01N 21/45*** *(2006.01)*

(52) Classification Coopérative des Brevets (CPC):
**G01N 21/4133; G01N 21/45**

(54) **DISPOSITIF DE MESURE DE L'INDICE DE REFRACTION D'UN FLUIDE**

GERÄT ZUR MESSUNG DES BRECHUNGSINDEX EINER FLÜSSIGKEIT

DEVICE FOR MEASURING THE REFRACTIVE INDEX OF A FLUID

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **18.12.2023 FR 2314430**

(43) Date de publication de la demande:
**25.06.2025 Bulletin 2025/26**

(73) Titulaire: **Commissariat à l'Energie Atomique et
aux Energies
Alternatives
75015 Paris (FR)**

(72) Inventeur: **LE PERCHEC, Jérôme
38054 Grenoble cedex 09 (FR)**

(74) Mandataire: **Santarelli
Tour Trinity
1 bis Place de la Défense
92400 Courbevoie (FR)**

(56) Documents cités:
**EP-A1- 3 023 767 KR-A- 20110 031 766
US-A1- 2009 153 844**

**Description**

**DOMAINE TECHNIQUE**

Le domaine de l'invention est celui des dispositifs intégrés de mesure de l'indice de réfraction d'un fluide, comme, par exemple, un liquide ou un gaz. Plus particulièrement, l'invention concerne la détection par réfractométrie d'un analyte dans un fluide, et éventuellement la mesure d'une concentration de cet analyte dans le fluide.

**ÉTAT DE LA TECHNIQUE ANTÉRIEURE**

Il existe de nombreuses techniques pour mesurer l'indice de réfraction d'un fluide tel qu'un liquide ou un gaz. Certaines ont conduit à la réalisation de réfractomètres intégrés, c'est-à-dire qu'ils comportent des composants microscopiques, optiques et éventuellement électroniques, réalisés sur un substrat. Les composants peuvent être, par exemple, des guides d'ondes, des coupleurs, des interféromètres, des anneaux résonnants, des cristaux photoniques, des photodétecteurs ou des lasers. Ces réfractomètres sont particulièrement intéressants pour la réalisation de biocapteurs. Ceux-ci sont utilisés pour de nombreuses applications, par exemple dans le domaine de la surveillance environnementale ou de la sécurité alimentaire, ou encore dans celui des diagnostics cliniques. Le document « Optical biosensors based on refractometric sensing schemes: A review » , Yangyang Chen et al., Biosensors and Bioelectronics, volume 144 (2019) 111693, passe en revue les avancées dans le domaine des biocapteurs optiques basés sur un principe de détection par réfractométrie, et discute plus particulièrement des opportunités d'intégration sur un substrat et de miniaturisation de ces biocapteurs.

Parmi les techniques citées, il est décrit un biocapteur mettant en œuvre un interféromètre de Mach-Zehnder. Un mode lumineux monochromatique incident est séparé en deux modes lumineux produits par une jonction Y, circulant chacun dans une branche de l'interféromètre de Mach-Zehnder, dont une branche de mesure. La branche de mesure, en contact avec un fluide, intègre un élément de bio-reconnaissance, qui peut être une matière biologique (par exemple des enzymes, des anticorps, des acides nucléiques, des récepteurs cellulaires, des micro-organismes, des tissus, des organites ou d'autres produits naturels), un matériau biomimétique (par exemple un polymère imprimé, un catalyseur biomimétique, des récepteurs synthétiques ou des ligands combinatoires) ou de la matière biologique dérivée (par exemple, des acides nucléiques fonctionnels, des micro-organismes recombinants, des protéines modifiées).

En fonctionnement, l'élément de bio-reconnaissance interagit avec un analyte d'intérêt contenu dans le fluide, pour le fixer sur une paroi de la branche de mesure. Ainsi l'indice effectif vu par le mode lumineux produit circulant dans la branche de mesure est modifié et un déphasage se crée entre ce mode lumineux et le mode lumineux produit circulant dans l'autre branche, dite branche de référence. La différence de phase est convertie en changement de puissance lumineuse en sortie de l'interféromètre de Mach-Zehnder. Un calcul permet alors de remonter de la variation de puissance lumineuse détectée à la variation de l'indice effectif et ensuite à l'indice du milieu interagissant avec la partie évanescente du mode lumineux produit circulant dans la branche de mesure.

Le document US 2009/153844 décrit un réfractomètre microfluidique intégré à haute résolution de Fabry-Pérot. Un dispositif similaire est décrit dans le document EP 3 023 767 A1, comprenant un étalon Fabry-Pérot comportant une cavité ouverte à contenir un gaz à mesurer. Une autre configuration similaire est connue du document KR 2011 0031766 A, décrivant un système et un procédé de mesure de l'indice de réfraction d'un échantillon en forme de plaque utilisant l'interférence de la lumière transmise et de la lumière réfléchie.

D'autres techniques interférométriques à base de guides d'onde, comme par exemple celles mettant en œuvre des anneaux résonnants, ont pour principe commun d'exploiter une variation d'indice effectif d'un mode optique guidé. Elles ont donc pour inconvénient de n'être sensibles qu'à une variation d'indice de réfraction d'une région superficielle du milieu environnant qui interagit avec une partie évanescente du mode guidé, donc très proche du guide d'onde associé. Pour accroître leur sensibilité de détection, il est donc nécessaire d'avoir recours à un élément de bio-reconnaissance adapté, comme expliqué supra. Il est par conséquent aussi nécessaire de faire écouler le fluide, le temps que l'analyte d'intérêt interagisse avec l'élément de bio-reconnaissance, typiquement compris entre 30 secondes et une minute. La mesure ne peut donc pas être instantanée. De plus, elle peut être perturbée par la présence de bulles à la surface du guide d'onde et elle résulte d'un traitement calculatoire complexe.

**EXPOSÉ DE L'INVENTION**

L'invention a pour objectif de remédier au moins en partie aux inconvénients de l'art antérieur, et plus particulièrement de proposer une sonde et un réfractomètre intégrés permettant de mesurer un indice de réfraction moyen et/ou une absorption moyenne d'un volume de fluide à partir d'un traitement de signal simplifié. La mesure est de plus instantanée, n'est pas perturbée par la présence de bulles dans le fluide, et ne nécessite pas un écoulement du fluide. Le fluide peut être un gaz ou un liquide.

**EP 4 575 463 B1**

Pour cela, l'objet de l'invention est une sonde, comportant un guide planaire d'entrée comprenant une première face de sortie et un guide planaire de sortie en transmission comprenant une deuxième face d'entrée. La sonde comporte en outre une cavité Fabry-Pérot configurée pour accueillir un fluide, et délimitée par la première face de sortie du guide planaire d'entrée, et par la deuxième face d'entrée du guide planaire de sortie en transmission. La sonde comporte un guide planaire de sortie en réflexion couplé optiquement au guide planaire d'entrée par la cavité Fabry-Pérot, comportant un axe optique au niveau de la première face faisant un angle d'ouverture aigu avec un axe optique au niveau de la première face du guide planaire d'entrée. La cavité Fabry-Pérot étant agencée de façon à ce qu'une normale à la première face constitue une bissectrice de l'angle d'ouverture.

Certains aspects préférés mais non limitatifs de cette sonde sont les suivants.

Le guide planaire de sortie en transmission peut avoir un axe optique au niveau de la deuxième face parallèle à l'axe optique du guide planaire d'entrée,

L'axe optique du guide planaire de sortie en transmission peut être contenu dans le même demi-plan ouvert délimité par l'axe optique du guide planaire d'entrée que le guide planaire de sortie en réflexion.

Les guides planaires de sortie en transmission et en réflexion peuvent être chacun couplés à un réseau de couplage.

La sonde peut comprendre en outre une paroi absorbante entre les guides planaires de sortie en transmission et en réflexion.

La première et/ou la deuxième face peuvent intégrer un élément de bio-reconnaissance.

L'invention porte également sur réfractomètre comportant un diviseur de puissance, et un premier groupe de sondes selon l'une quelconque des caractéristiques précédentes, couplées optiquement au diviseur de puissance. Au moins une sonde peut avoir son angle d'ouverture ou une largeur de la cavité Fabry-Pérot différents respectivement, de l'angle d'ouverture ou d'une largeur de la cavité Fabry-Pérot d'une autre sonde.

Les sondes du premier groupe peuvent avoir des angles d'ouverture égaux, et des largeurs de cavité Fabry-Pérot différentes choisies parmi un ensemble ordonné de valeurs distinctes.

Les sondes du premier groupe peuvent avoir des cavités Fabry-Pérot de même largeur, et des angles d'ouverture différents choisis parmi un ensemble ordonné de valeurs distinctes.

Le réfractomètre peut comporter en outre un boîtier comprenant un canal micro-fluidique d'intérêt communiquant avec les cavités Fabry-Pérot des sondes du premier groupe.

Le réfractomètre peut comprendre en outre un deuxième groupe de sondes couplées optiquement au diviseur de puissance, chaque sonde du deuxième groupe étant identique à une sonde du premier groupe.

Le boîtier peut comprendre en outre un canal micro-fluidique de référence communiquant avec les cavités Fabry-Pérot des sondes du deuxième groupe.

Les guides planaires d'entrée, de sortie en transmission et de sortie en réflexion peuvent être en un matériau commun.

Le réfractomètre peut comprendre en outre une voie de sortie couplée optiquement à chaque guide planaire de sortie en transmission et à chaque guide planaire de sortie en réflexion, les voies de sortie pouvant avoir des extrémités alignées.

L'invention porte également sur une utilisation d'un réfractomètre selon l'une quelconque des caractéristiques précédentes, pour mesurer un indice de réfraction et/ou une absorption d'un fluide d'intérêt, à l'aide d'une source de lumière couplée optiquement à une entrée du diviseur de puissance.

Pour cette utilisation les guides planaires d'entrée peuvent avoir la même largeur. L'ensemble ordonnée peut couvrir au moins en partie la gamme comprise entre 1,8*θc et 2,0*θc, où θc est l'angle minimal de réflexion totale des premières faces des guides planaires d'entrée.

La largeur des cavités Fabry-Pérot peut être telle qu'un flux lumineux transmis issu de la source de lumière a une intensité dans un guide planaire de sortie en transmission d'une sonde dont l'angle d'ouverture n'est pas égal à une des bornes de l'ensemble ordonné de valeurs, strictement supérieure à son intensité dans tous les guides planaires de sortie en transmission des autres sondes.

La mesure de l'indice de réfraction du fluide d'intérêt peut découler d'une constatation d'un décalage de la position d'un maximum et/ou d'un minimum d'intensité ou de contraste d'intensité entre les voies de sortie premier groupe et les voies de sortie du deuxième groupe.

**BRÈVE DESCRIPTION DES DESSINS**

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

La figure 1 est une vue schématique en coupe longitudinale selon un plan CC' d'un exemple de sonde.

La figure 2 est une vue de dessus d'un exemple d'interféromètre de Fabry-Pérot mis en œuvre dans l'invention.

La figure 3 est une vue schématique en coupe longitudinale selon un plan CC' d'un exemple de réfractomètre.

La figure 4A est une vue schématique en coupe transversale suivant un plan AA' de l'exemple de sonde et de l'exemple de réfractomètre.

La figure 4B est une vue schématique en coupe transversale suivant un plan BB' de l'exemple de réfractomètre.

La figure 5A est un résultat de simulation de flux lumineux transmis et réfléchis par l'interféromètre de Fabry-Pérot en présence de deux liquides d'indices de réfraction différents.

La figure 5B est un résultat de simulation de flux lumineux transmis et réfléchis par l'interféromètre de Fabry-Pérot en présence de trois liquides d'absorptions différentes.

La figure 6 est un exemple de flux lumineux en sortie de l'exemple de réfractomètre.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire. Enfin, sauf mention contraire, quand un premier élément repose sur un deuxième élément, le premier élément est de préférence en contact physique avec le premier élément.

L'invention porte sur une sonde et un réfractomètre comprenant la sonde. Cette dernière comporte une cavité Fabry-Pérot configurée pour accueillir un fluide, un guide planaire d'entrée, un guide planaire de sortie en transmission et un guide planaire de sortie en réflexion. Le guide planaire d'entrée est couplé optiquement aux guides planaires de sortie en transmission et en réflexion par la cavité Fabry-Pérot. La cavité Fabry-Pérot est délimitée par une première face et une deuxième face. La première face est une sortie du guide planaire d'entrée et une entrée du guide planaire de sortie en réflexion. La deuxième face est une entrée du guide planaire de sortie en transmission.

Les axes optiques du guide planaire d'entrée et du guide planaire de sortie en réflexion forment un angle au niveau de la première face, appelé angle d'ouverture. Une normale à la première face est une bissectrice de l'angle d'ouverture. Ainsi, en fonctionnement, un mode optique entrant se propage dans le guide planaire d'entrée. Il est divisé par la sonde en plusieurs parties dont une partie transmise se propage dans le guide planaire de sortie en transmission, une partie réfléchie se propage dans le guide planaire de sortie en réflexion et une partie est absorbée par le fluide. Le ratio d'intensité entre la partie transmise et la partie réfléchie dépend de l'indice optique complexe moyen du volume de fluide contenu par la cavité Fabry-Pérot.

L'angle d'ouverture est tel que l'axe optique du guide planaire d'entrée forme un angle $\theta$ avec la normale à la première face. Cet angle $\theta$ est inférieur à l'angle critique $\theta_c$ au-delà duquel un mode guidé par le guide planaire d'entrée se réfléchit totalement sur la première face. Avantageusement, le guide planaire d'entrée et les guides planaires de sortie en transmission et en réflexion sont en un même matériau et l'angle d'ouverture est de préférence supérieur ou égal à 180% de $\theta_c$. Ainsi, le pouvoir réflecteur des faces et la finesse de la cavité Fabry-Pérot sont augmentés, en même temps que la perte de couplage entre le guide planaire d'entrée et le guide planaire de sortie en réflexion est diminuée. De préférence, la largeur de la cavité Fabry-Pérot est choisie pour maximiser le ratio d'intensité entre la partie transmise et la partie réfléchie.

Le réfractomètre de l'invention comporte un diviseur de puissance et un premier groupe de sondes couplées optiquement au diviseur de puissance. De préférence, les cavités Fabry-Pérot des sondes ont toutes la même largeur et les angles d'ouverture des sondes prennent des valeurs distinctes. Ainsi, lorsque le diviseur de puissance est illuminé par une source de lumière, par exemple une LED, il est possible de déterminer l'indice de réfraction du fluide par comparaison à une référence des parties transmises et réfléchies issues de différentes sondes. Un résultat similaire peut être obtenu avec un premier groupe de sondes tel que les cavités Fabry-Pérot des sondes ont des largeurs distinctes et des angles d'ouverture identiques.

Dans toute la description, deux composants optiques, comme par exemple des guides d'onde, sont dits « couplés optiquement » si un mode optique peut se propager au moins en partie dans les deux composants optiques, éventuellement via des composants optiques intermédiaires. Le couplage peut se faire de différentes façons, par exemple via un couplage direct, un réseau de diffraction, un couplage adiabatique, ou évanescent, ou directionnel.

Dans toute la description, un guide d'onde planaire est un guide d'onde s'étendant dans un plan. Il consiste en un cœur qui est entouré d'une gaine. La gaine peut comprendre un fluide. Le guide planaire peut être en arête ou en bande. Lorsqu'il est en arête, le cœur est constitué par une partie étroite s'étendant sur une base à faces planes et parallèles au plan, de sorte qu'une section transversale du cœur en tout point du guide d'onde planaire a une forme de T. Lorsqu'il est en bande, il est dépourvu de base, de sorte qu'une section transversale du cœur, celle de la partie étroite, est sensiblement de forme rectangulaire. Un indice de réfraction du cœur est strictement supérieur à un indice de réfraction de la gaine. Le guide d'onde planaire s'étend le long d'un axe otique. En tout point de l'axe optique, la partie étroite a une largeur orthogonale à l'axe optique et parallèle au plan, au moins 10 fois supérieure à son épaisseur du cœur mesurée dans une direction orthogonale au plan. Le guide planaire est monomode ou au moins pourvu d'un moyen pour exciter uniquement un mode fondamental du guide planaire. L'épaisseur du cœur peut être comprise entre 100 nm et 800 nm, par exemple égale à 300 nm ou 500 nm. La largeur de la partie étroite peut être comprise entre 1 $\mu$m et 90 $\mu$m. Lorsque le guide planaire est monomode, l'épaisseur du cœur h vérifie la relation $\frac{2h}{\lambda}\sqrt{n_2^2 - n_1^2} < 1$, où $n_1$ est l'indice de réfraction de la gaine, $n_2$ est l'indice de réfraction du cœur et À est la longueur d'onde du mode guidé par le guide planaire.

L'indice de réfraction complexe, appelé aussi indice optique complexe, est un nombre sans dimension qui caractérise les propriétés optiques d'un milieu, notamment l'absorption et la diffusion. L'indice de réfraction est égal à la partie réelle de l'indice de réfraction complexe. Le coefficient d'extinction, également appelé coefficient d'atténuation, d'un matériau, mesure la perte d'énergie d'un rayonnement électromagnétique traversant ce matériau. Le coefficient d'extinction est égal à la partie imaginaire de l'indice de réfraction complexe.

L'invention sera mieux comprise à la lumière de modes de réalisation particuliers ci-après décrits se rapportant à une sonde ou un réfractomètre comportant un interféromètre de Fabry-Pérot.

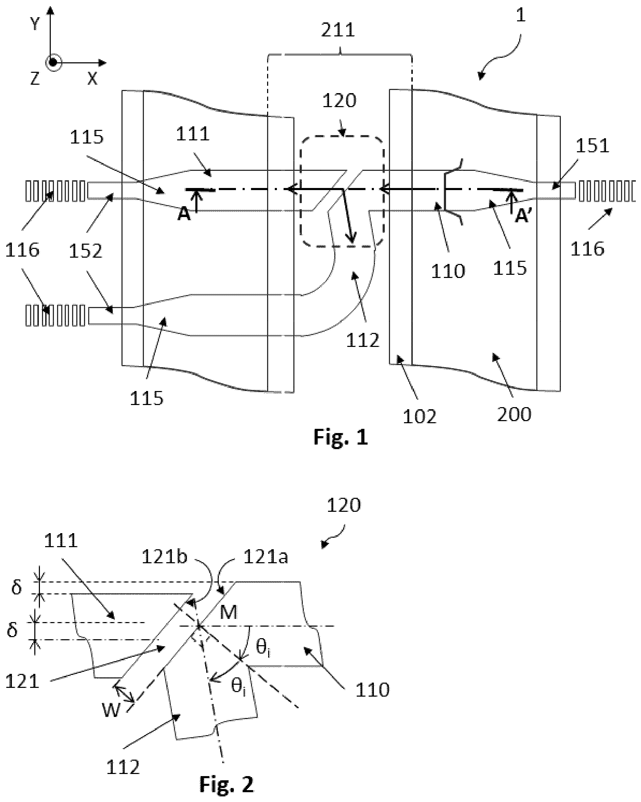

La figure 1 est une vue schématique de dessus d'un exemple de sonde 1 selon l'invention. La sonde 1 comporte un interféromètre de Fabry-Pérot 120. L'interféromètre de Fabry-Pérot 120 comprend un guide planaire d'entrée 110, un guide planaire de sortie en transmission 111 et un guide planaire de sortie en réflexion 112 s'étendant tous trois sur un substrat 100.

Le substrat 100 comporte une face avant et une face arrière parallèle et opposée à la face avant et aux guides planaires. Il est par exemple issu, après découpe éventuelle, d'une plaque en forme de disque de diamètre 100 mm, 150 mm, 200 mm, 300 mm, par exemple en silicium. S'il n'a pas été aminci, il a typiquement une épaisseur de quelques centaines de micron, par exemple égale à 525 $\mu$m, 675 $\mu$m, 725 $\mu$m ou 775 $\mu$m.

On définit ici et pour la suite de la description un repère tridimensionnel orthogonal direct (X, Y, Z), où les axes X et Y forment un plan parallèle à la face avant du substrat 100, et où l'axe Z est orienté depuis la face arrière vers la face avant. Dans la suite de la description, les termes « vertical » et « verticalement » s'entendent comme étant relatifs à une orientation sensiblement parallèle à l'axe Z, et les termes « horizontal » et « horizontalement » comme étant relatifs à une orientation sensiblement parallèle au plan (X, Y). Par ailleurs, les termes « inférieur » et « supérieur » s'entendent comme étant relatifs à un positionnement croissant lorsqu'on s'éloigne du substrat 100 suivant la direction +Z. Le terme « latéral(e) » appliqué à un plan, une face, ou une surface caractérise une orientation orthogonale au plan (X, Y) respectivement, du plan, de la face ou de la surface.

Dans toute la description, les guides d'onde s'étendent parallèlement à la face avant du substrat 100 et donc parallèlement au plan (X, Y). L'axe optique d'un guide d'onde est localement parallèle à la direction le long de laquelle la lumière est guidée dans le guide d'onde. Il est généralement un axe de symétrie du guide d'onde et peut être déterminé par simulation. Sauf mention contraire, la largeur d'un guide d'onde est mesurée au niveau de l'axe optique, orthogonalement à celui-ci et parallèlement à la face avant du substrat 100.

Le guide planaire d'entrée 110 s'étend parallèlement à la face avant du substrat 100 depuis une première face 121a latérale du guide planaire d'entrée 110. La première face 121a est plane et sensiblement orthogonale à la face avant du substrat 100.

Le guide planaire de sortie en réflexion 112 s'étend parallèlement à la face avant du substrat 100. La première face 121a du guide planaire d'entrée 110 est également une face latérale du guide planaire de sortie en réflexion 112, c'est-à-dire que le guide planaire d'entrée 110 et le guide planaire de sortie en réflexion 112 ont une région commune.

Le guide planaire d'entrée 110 a un axe optique au niveau de la première face 121a faisant un angle, dit angle d'ouverture, avec un axe optique du guide planaire de sortie en réflexion 112 au niveau de la première face 121a. Les axes optiques du guide planaire d'entrée 110 et du guide planaire de sortie en réflexion 112 s'intersectent en un point M situé au voisinage de la première face 121a, préférentiellement sur la première face 121a. La normale à la première face 121a passant par le point M est une bissectrice de l'angle d'ouverture. L'axe optique du guide planaire d'entrée 110 fait un angle orienté $\theta_i$ aigu avec la normale à la première face 121a. Par conséquent, l'angle d'ouverture est égal à $2\theta_i$.

Le guide planaire de sortie en transmission 111 s'étend parallèlement à la face avant du substrat 100 depuis une deuxième face 121b latérale du guide planaire de sortie en transmission 111. La deuxième face 121b est plane, sensiblement orthogonale à la face avant du substrat 100 et sensiblement parallèle à la première face 121a. Ainsi, les première et deuxième faces 121a, 121b définissent ensemble une cavité Fabry-Pérot 121. La première et/ou la deuxième face 121a, 121b peut intégrer un élément de bio-reconnaissance, par exemple apte à fixer un allergène sur l'une des deux faces. La cavité Fabry-Pérot 121 peut également contenir un matériau diélectrique poreux, par exemple un oxyde de silicium poreux. Le matériau diélectrique poreux peut alors intégrer un élément de bio-reconnaissance.

Le guide planaire de sortie en transmission 111 a avantageusement un axe optique au niveau de la deuxième face 121b parallèle à l'axe optique du guide planaire d'entrée 110. Préférentiellement, les largeurs du guide planaire d'entrée 110 et du guide planaire de sortie en réflexion 112, hors région commune, mesurées au plus près de la première face 121a sont égales à la largeur du guide planaire de sortie en transmission 111 au niveau de la deuxième face 121b, comme représenté en figure 2.

L'axe optique du guide planaire d'entrée 110 au niveau de la première face 121a définit deux demi-plans ouverts ne l'incluant pas. Avantageusement, l'axe optique du guide planaire de sortie en transmission 111 est décalé d'une distance $\delta$ par rapport à l'axe optique du guide planaire d'entrée 110 pour compenser un décalage induit par un phénomène de réfraction au passage des dioptres plans définis par les première et deuxième faces 121a, 121b. Il est donc décalé de sorte qu'il appartient au même demi-plan ouvert que le guide planaire de sortie en réflexion 112. Ainsi, une perte de couplage entre le guide planaire d'entrée 110 et le guide planaire de sortie en transmission 111 est minimisée.

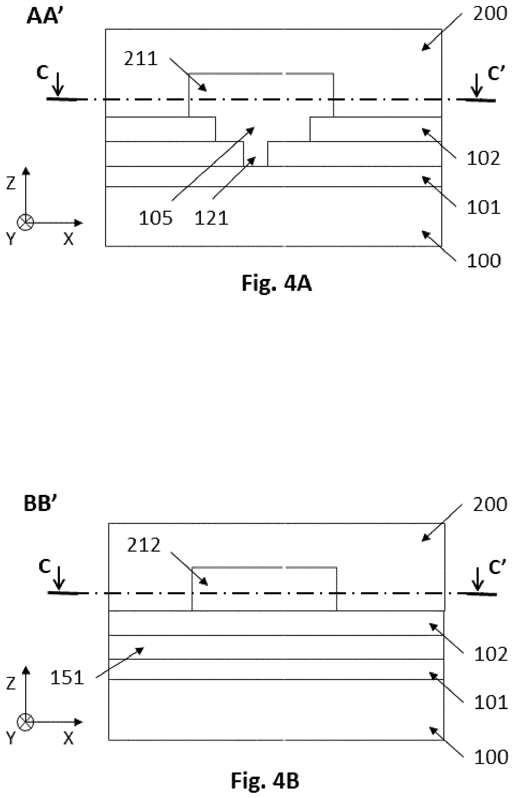

Dans cet exemple, comme représentée sur la figure 4A, une sous-couche d'encapsulation 101 repose sur la face avant du substrat 100 et les guides planaires d'entrée, de sortie en transmission et de sortie en réflexion 110, 111, 112 sont en contact avec la sous-couche d'encapsulation 101. La sous-couche d'encapsulation 101 a un indice de réfraction strictement inférieur au plus petit des indices de réfraction des guides planaires d'entrée, de sortie en transmission et de sortie en réflexion 110, 111, 112. La sous-couche d'encapsulation 101 est typiquement une couche diélectrique, par exemple un oxyde de silicium. L'épaisseur de la sous-couche d'encapsulation 101 le long de l'axe Z est suffisante pour qu'un mode optique guidé par les guides planaires d'entrée, de sortie en transmission et de sortie en réflexion 110, 111, 112 ne fuit pas dans le substrat 100.

Une couche d'encapsulation structurée 102 est en contact avec la sous-couche d'encapsulation 101 et recouvre les guides planaires d'entrée, de sortie en transmission et de sortie en réflexion 110, 111, 112 de façon à être en contact avec eux. Elle a un indice de réfraction strictement inférieur au plus petit des indices de réfraction des guides planaires d'entrée, de sortie en transmission, de sortie en réflexion 110, 111, 112. La couche d'encapsulation structurée 102 peut être en un même matériau que la sous-couche d'encapsulation 101. Elle est typiquement une couche diélectrique, par exemple un oxyde de silicium.

La couche d'encapsulation structurée 102 comporte une ouverture traversante exposant la cavité Fabry-Pérot 121, c'est-à-dire que l'ouverture traversante délimite un volume qui occupe une partie au moins du parallélépipède défini par les première et deuxième faces 121a, 121b, préférentiellement tout le volume. Par conséquent, l'ouverture traversante définit une fenêtre 105 au travers de laquelle un fluide accède à la cavité Fabry-Pérot 121, en ce sens la cavité Fabry-Pérot 121 est configurée pour accueillir le fluide. Dans le cas où la cavité Fabry-Pérot 121 contient un matériau diélectrique poreux, le fluide accède à la cavité Fabry-Pérot 121 et pénètre dans le matériau diélectrique poreux. Les indices de réfraction du guide planaire d'entrée 110 et des guides planaires de sortie en transmission et en réflexion 111, 112 sont strictement supérieurs à l'indice de réfraction du fluide. Les guides planaires d'entrée et de sortie en transmission et en réflexion 110, 111, 112 peuvent être en un matériau diélectrique, par exemple en nitrure de silicium.

Par exemple, le fluide accède à la cavité Fabry-Pérot 121 par un canal micro-fluidique 211. Le canal micro-fluidique 211 est une tranchée, ici rectiligne, formée dans un boîtier 200. La tranchée s'étend en profondeur depuis une face d'appui du boîtier 200. Le boîtier 200 peut être en verre ou en un polymère. Le canal micro-fluidique 211 a un fond parallèle à la surface d'appui, et deux parois latérales sensiblement orthogonales au fond. Il a par exemple une largeur, mesurée orthogonalement aux faces latérales, de 0,5 mm. La surface d'appui du boîtier 200 repose sur la couche d'encapsulation structurée 102. Le boîtier 200 est disposé de façon à ce que le fond du canal micro-fluidique 211 soit en regard de la fenêtre 105 et de la cavité Fabry-Pérot 121. Ainsi, le canal micro-fluidique 211 communique avec la cavité Fabry-Pérot 121.

La sonde 1 comporte deux voies de sortie 152 et une voie d'entrée 151. Les voies d'entrée et de sortie 151, 152 sont des guides d'onde, par exemple monomodes. Le guide planaire d'entrée 110 est couplé optiquement à la voie d'entrée 151, éventuellement par une région d'adaptation de mode 115. Les guides planaires de sortie en transmission et en réflexion 111, 112 sont chacun couplés optiquement à une voie de sortie 152, éventuellement par une région d'adaptation de mode 115. Chaque région d'adaptation de mode 115 est ici une région d'un guide d'onde en couplage direct avec les guides planaires et les voies d'entrée/sortie, dont la largeur varie graduellement le long de son axe optique.

Dans cet exemple, le guide planaire de sortie en réflexion 112 comporte un coude à l'intérieur duquel l'axe optique du guide planaire de sortie en réflexion 112 a une forme sensiblement en arc de cercle, de rayon de courbure suffisamment grand pour guider la lumière. La longueur de l'arc de cercle est tel que les voies de sortie 152 sont parallèles entre-elles. Alternativement, le guide planaire de sortie en réflexion 112 est rectiligne et la voie de sortie 152 couplée optiquement au guide planaire de sortie en réflexion 112 comporte le coude, dans le même but.

Lorsque les voies de sortie 152 sont parallèles entre-elles, une paroi séparatrice (non représentée) peut être intercalée entre le guide planaire de sortie en transmission 111 et le guide planaire de sortie en réflexion 112 et/ou entre les voies de sortie 152 couplées au guide planaire d'entrée 110 et au guide planaire de sortie en réflexion 112. La paroi séparatrice peut être en un matériau absorbant ou réfléchissant la lumière à une longueur d'onde de fonctionnement de la sonde 1. La paroi séparatrice peut par exemple être en TiN. Ainsi, il est possible de rapprocher les voies de sortie ou les guides planaires de sortie, sans risquer de couplage optique entre eux. La sonde 1 est alors plus compacte.

Les voies de sortie 152 sont chacune couplées optiquement à un réseau de couplage 116 optionnel, apte à extraire un mode optique guidé par les voies de sortie 152. Ainsi, il est possible de visualiser ou mesurer une différence ou un ratio d'intensité entre une partie transmise se propageant dans le guide planaire de sortie en transmission 111 et une partie réfléchie se propageant dans le guide planaire de sortie en réflexion 112 d'un mode optique guidé par le guide planaire d'entrée 110.

Ici, la voie d'entrée 151, les voies de sortie 152, les régions d'adaptation de mode 115 et les réseaux de couplage 116 reposent sur la sous-couche d'encapsulation 101, et peuvent, au moins en partie, ne pas être recouverts par la couche d'encapsulation structurée 102.

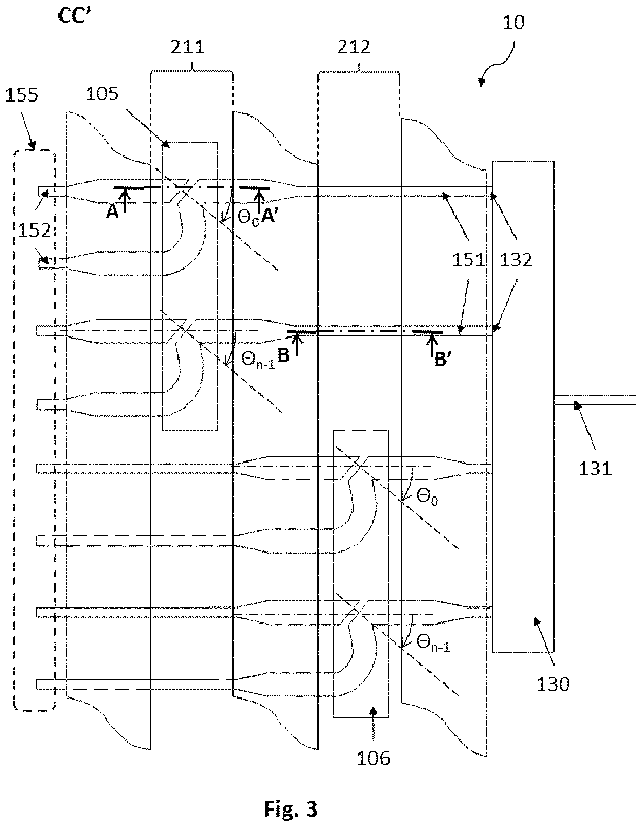

A présent, un exemple de réalisation de réfractomètre 10 va être décrit en lien avec les figures 3, 4A et 4B. La figure 3 est une vue de dessus du réfractomètre 10 selon un plan de coupe C-C' repéré sur les figures 4A et 4B. La figure 4A est une vue en coupe transversale selon un plan de coupe A-A' repéré sur la figure 3. La figure 4B est une vue en coupe transversale selon un plan de coupe B-B' repéré sur la figure 3.

Le réfractomètre 10 comprend un premier groupe de n sondes 1, numérotées de 0 à n-1, n étant un entier supérieur ou égal à 2, préférentiellement supérieur ou égal à 10, voire supérieur ou égal à 20 ou 30. Les sondes 1 du premier groupe sont identiques à celle décrite en lien avec les figures 1 et 2.

Dans cet exemple, le réfractomètre 10 comporte un deuxième groupe optionnel de n sondes 1 de référence, numérotées de 0 à n-1. L'interféromètre de Fabry-Pérot 120 de chaque sonde 1 du deuxième groupe est identique à l'interféromètre de Fabry-Pérot 120 de la sonde 1 du même rang dans le premier groupe.

Le réfractomètre 10 comporte en outre un diviseur de puissance 130. Le diviseur de puissance 130 comprend une entrée 131 et 2n sorties 132. La voie d'entrée 151 de chaque sonde 1 du premier et du deuxième groupes de sondes est couplée optiquement à une sortie 132 distincte du diviseur de puissance 130. Le diviseur de puissance 130 peut par exemple comprendre un ensemble de jonctions Y et/ou des interféromètres multimode. Il est apte à diviser la puissance d'un flux lumineux en entrée 131 à parts égales sur les sorties 132 couplées optiquement au premier groupe de sondes 1 et, le cas échéant, à part égales sur les sorties 132 couplées optiquement au deuxième groupe de sondes 1, avantageusement à part égale sur les 2n sorties 132. Le flux lumineux peut être issu d'un laser, ou une diode électroluminescente, cette dernière étant plus économique.

Les sondes 1 du premier groupe partagent un canal micro-fluidique 211 commun et, avantageusement, une fenêtre 105 commune, comme représenté en figure 3 et figure 4A. Les sondes 1 du deuxième groupe partagent également un canal micro-fluidique 212 commun et, avantageusement, une fenêtre 106 commune. Dans la description, la fenêtre 105 et le canal micro-fluidique 211 communs au premier groupe sont qualifiés d' « intérêt ». Ils sont respectivement distincts de la fenêtre 106 et du canal micro-fluidique 212 communs au deuxième groupe. Dans la description, la fenêtre 106 et le canal micro-fluidique 212 communs au deuxième groupe sont qualifiés de « référence ». Les sondes 1 de chaque groupe sont disposées par ordre de rang le long des canaux micro-fluidiques d'intérêt et de référence 211, 212.

Ici, le canal micro-fluidique d'intérêt 211 se prolonge sur une région de la couche d'encapsulation structurée 102 recouvrant les sondes 1 du deuxième groupe, c'est-à-dire que le canal micro-fluidique d'intérêt 211 est séparé des sonde 1 du deuxième groupe dans la direction Z par la couche d'encapsulation structurée 102. De même, le canal micro-fluidique de référence 212 se prolonge sur une région de la couche d'encapsulation structurée 102 recouvrant les sondes 1 du premier groupe (figure 4B).

Chaque sonde 1 de rang i a, par définition, un angle d'ouverture égal à $2\theta_i$. Dans cet exemple, les $\theta_i$ sont régulièrement espacés, c'est-à-dire que $(\theta_{i+1} - \theta_i) = (\theta_1 - \theta_0)$ pour tout i appartenant à $\{1, ..., n-2\}$. Les cavités Fabry-Pérot 121 de toutes les sondes 1 ont la même largeur W, mesurée orthogonalement aux première et deuxième faces 121a, 121b.

Alternativement, toutes les sondes peuvent avoir le même angle d'ouverture et des largeurs $W_i$ de cavités Fabry-Pérot 121 régulièrement espacées. Par exemple, pour tout i appartenant à $\{1, ..., n-2\}$, on peut avoir la relation $(W_{i+1} - W_i) = (W_1 - W_0)$.

Le réfractomètre 10 comporte une sortie de réfractomètre 155. Cette dernière comprend des extrémités des voies de sortie 152 des sondes 1 du premier groupe et, le cas échéant, des extrémités des voies de sortie 152 des sondes 1 du deuxième groupe. Chaque extrémité est apte à extraire une partie au moins d'un flux lumineux guidé par la voie de sortie 152 correspondante. Les extrémités peuvent par exemple être des réseaux de couplage 116 ou une section transversale de la voie de sortie 152. Ici, toutes les extrémités sont alignées et toutes les voies de sortie 152 sont parallèles. La sortie de réfractomètre 155 peut être inspectée à l'œil nu si le flux lumineux est compris dans la gamme des longueurs d'onde visibles. Indépendamment de la gamme spectrale du flux lumineux, la sortie de réfractomètre 155 peut être inspectée par tout type de moyens de détection du flux lumineux, comme des photodiodes ou un capteur matriciel.

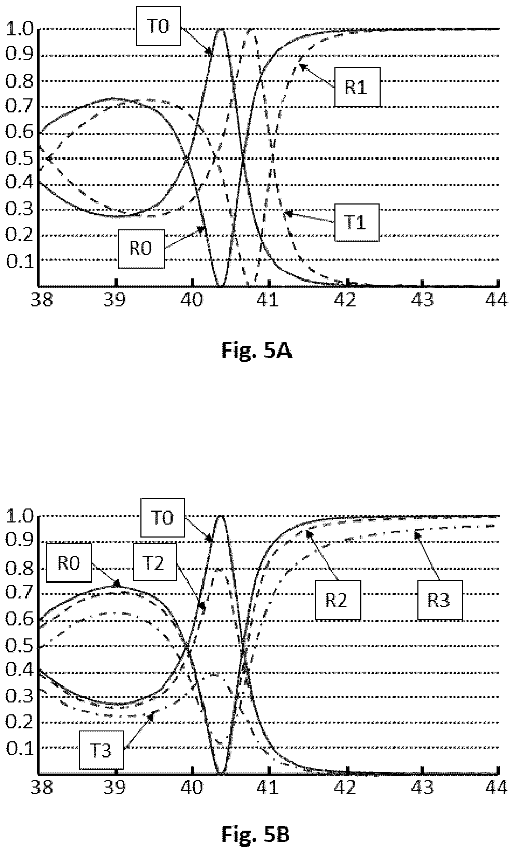

A présent, un exemple d'utilisation de la sonde 1 et du réfractomètre 10 va être décrite en prenant pour support les figures 5A et 5B.

La figure 5A et 5B sont des résultats de simulation donnant l'intensité normalisée d'une partie transmise T0, T1, T2, T3 se propageant dans le guide planaire de sortie en transmission 111 et d'une partie réfléchie R0, R1, R2, R3 se propageant dans le guide planaire de sortie en réflexion 112 d'un mode optique se propageant dans le guide planaire d'entrée 110 d'une sonde 1 telle que décrite en lien avec la figure 1. L'intensité normalisée (axe des ordonnées) est donnée en fonction du demi-angle d'ouverture $\theta_i$ en degrés (axe des abscisses).

La longueur d'onde du mode optique est égale à 750 nm. Les guides planaires d'entrée, de sortie en transmission et de sortie en réflexion 110, 111, 112 sont en nitrure de silicium. La cavité Fabry-Pérot 121 a une largeur mesurée perpendiculairement à la première face 121a égale à 1,25 $\mu$m.

Les courbes T0 et R0 sont obtenues avec la cavité Fabry-Pérot 121 remplie d'eau pure. Les courbes T1 et R1 sont obtenues avec la cavité Fabry-Pérot 121 remplie d'eau additionnée d'une concentration d'analyte induisant une variation d'indice de réfraction égale à 0,01 par rapport à l'indice de réfraction de l'eau pure.

Ainsi, par exemple, avec une sonde 1 configurée pour avoir un demi-angle d'ouverture égal à 40,35 degrés (correspondant à un maximum de partie transmise, et un minimum de partie réfléchie en présence d'eau pure), un apport d'analyte correspondant à une variation d'indice de réfraction de 0,01 fait passer la différence d'intensités des parties transmise et réfléchie de 1 à 0, et le ratio de l'infini à 1. Une détection ou une mesure d'une concentration d'analyte peuvent également être opérées avec toute autre sonde 1 dont l'angle d'ouverture permet de mesurer/visualiser une variation d'intensité de la partie transmise et/ou réfléchie fonction de la concentration d'analyte.

Les courbes T2 et R2 (respectivement T3 et R3) sont obtenues avec la cavité Fabry-Pérot 121 remplie d'un fluide induisant une variation de la partie imaginaire de l'indice optique complexe égale à 0,001 (respectivement 0,005) par rapport à la partie imaginaire de l'indice de réfraction de l'eau pure.

Ainsi, par exemple, avec une sonde 1 configurée pour avoir un demi-angle d'ouverture égal à 40,35 degrés, une variation de la partie imaginaire de l'indice de réfraction du fluide contenu dans la cavité Fabry-Pérot 121 fait varier les intensités des parties réfléchie et transmise. Une variation d'absorption du fluide peut alors être détectée ou mesurée. Il en est de même avec d'autres valeurs d'angles d'ouverture.

Afin de décorréler une variation de la partie réelle d'une variation de la partie imaginaire de l'indice de réfraction d'un fluide d'intérêt par rapport à un fluide de référence, il est avantageux d'utiliser un réfractomètre 10 tel que décrit en lien avec la figure 3.

En fonctionnement, une source lumineuse de longueur d'onde moyenne $\lambda$, telle qu'un laser ou, avantageusement une diode électroluminescente, est couplée optiquement à l'entrée du diviseur de puissance 130 de sorte qu'un mode guidé entrant, de polarisation transverse électrique (TE) ou magnétique (TM), se propage dans l'entrée du diviseur de puissance 130. Le fluide d'intérêt (respectivement de référence) remplit le canal micro-fluidique d'intérêt 211 (respectivement le canal micro-fluidique de référence 212) et les cavités Fabry-Pérot 121 des sondes 1 du premier groupe (respectivement du deuxième groupe).

Le diviseur de puissance 130 produit un mode guidé sortant issu du mode guidé entant dans chaque sortie du diviseur de puissance 130. Chaque mode guidé sortant produit un mode guidé de sonde se propageant dans le guide planaire d'entrée 110, un mode guidé transmis se propageant dans le guide planaire de sortie en transmission 111 et un mode guidé réfléchi se propageant dans le guide planaire de sortie en réflexion 112, de la sonde 1 correspondante. L'ensemble des modes guidés transmis des sondes 1 du premier groupe de sondes (respectivement du deuxième groupe de sondes) constitue un flux lumineux transmis du premier groupe (respectivement du deuxième groupe), et l'ensemble des modes guidés réfléchis du premier groupe de sondes (respectivement du deuxième groupe de sondes) constitue un flux lumineux réfléchi du premier groupe (respectivement du deuxième groupe). L'intensité du flux lumineux transmis (respectivement en réflexion) dans un guide planaire de sortie en transmission 111 (respectivement guide planaire de sortie en réflexion 112) est égale à l'intensité du mode guidé transmis (respectivement réfléchi) dans ce guide planaire.

De préférence, les guides planaires d'entrée 110 ont la même largeur et les demi-angles d'ouverture $\theta_i$ sont choisis de façon à échantillonner l'axe des abscisses des figures 5A et 5B. C'est-à-dire que les demi-angles d'ouverture $\theta_i$ couvrent, au moins en partie, la gamme d'angles comprise entre 0,9*$\theta_c$ et $\theta_c$, où $\theta_c$ est l'angle minimal tel que le mode guidé de sonde de toute sonde de demi-angle d'ouverture $\theta$ supérieur ou égal à $\theta_c$ se réfléchit totalement sur la première face 121a. $\theta_c$ est l'angle minimal de réflexion totale des premières faces 121a des guides planaires d'entrée 110 de toutes les sondes. Cet angle, dépend des indices de réfraction de la cavité Fabry-Pérot 121 et du guide planaire d'entrée 110, ainsi que de la géométrie de la première face 121a. Il peut être déterminé par simulation d'un mode guidé dans guide planaire d'entrée fictif de même largeur et nature que les guide planaire d'entrée 110, ceci pour plusieurs orientations de la première face du guide planaire d'entrée fictif. Pour un dioptre plan, $\theta_c = arcsin\left(\frac{n_1}{n_2}\right)$, où $n_1$ est égal à la partie réelle de l'indice de réfraction du fluide de référence et $n_2$ est égal à la partie réelle de l'indice de réfraction des guides d'entrée, de sortie en transmission et de sortie en réflexion 110, 111, 112. Ainsi, le pouvoir réflecteur des première et deuxième faces 121a, 121b et les finesses des cavités Fabry-Pérot sont maximisés, en même temps que les pertes de couplage entre les guides planaires d'entrée et les guides planaires de sortie en réflexion sont diminuées.

La largeur W des sondes 1 est de préférence telle que pour un $\theta$ réel compris dans la gamme d'angles, et un p entier positif, non nul, on a la relation : $sin(\theta) = \frac{n_1}{n_2}\sqrt{1 - \left(\frac{p\lambda}{2Wn_1}\right)^2}$. De préférence, p est égal à 1. Ainsi, les cavités Fabry-Pérot 121 opèrent proche d'une résonance.

En sortie de réfractomètre 155, le mode guidé transmis (respectivement réfléchi) de chaque sonde 1 de rang i du premier groupe a une intensité $I_{m,t}^i$ (respectivement $I_{m,r}^i$). Le mode guidé transmis (respectivement réfléchi) de chaque sonde 1 de rang i du deuxième groupe a une intensité $I_{r,t}^i$ (respectivement $I_{r,r}^i$).

Une phase de calibration optionnelle peut être établie au cours de laquelle un nombre $n_c$ de fluides d'intérêts d'indices de réfraction complexes différents, appelés fluides de calibration, sont évalués avec le premier groupe de sondes du réfractomètre 10. On enregistre alors, pour chaque fluide de calibration $c \in \{0,1, ..., n_c - 1\}$, l'intensité $I_{c,t}^i$ (respectivement $I_{c,r}^i$) du mode guidé transmis (respectivement réfléchi) obtenue en sortie de réfractomètre 155 avec le fluide de calibration c dans une bibliothèque de calibration. Les intensités $I_{c,t}^i$ et $I_{c,r}^i$ peuvent aussi être obtenues par simulation. $(I_{c,t}^0, I_{c,t}^1, ..., I_{c,t}^{n-1})$, $(I_{m,t}^0, I_{m,t}^1, ..., I_{m,t}^{n-1})$, $(I_{r,t}^0, I_{r,t}^1, ..., I_{r,t}^{n-1})$, $(I_{c,r}^0, I_{c,r}^1, ..., I_{c,r}^{n-1})$, $(I_{m,r}^0, I_{m,r}^1, ..., I_{m,r}^{n-1})$, $(I_{r,r}^0, I_{r,r}^1, ..., I_{r,r}^{n-1})$, définissent, respectivement, des vecteurs $I_{c,t}$, $I_{m,t}$, $I_{r,t}$, $I_{c,r}$, $I_{m,r}$, $I_{r,r}$ de $\mathbb{R}^n$

Plusieurs méthodes peuvent être utilisées pour déterminer la valeur de l'indice optique complexe du fluide d'intérêt à partir des intensités $I_{m,t}^i$ et/ou $I_{m,r}^i$. Seules quelques-unes sont ici décrites.

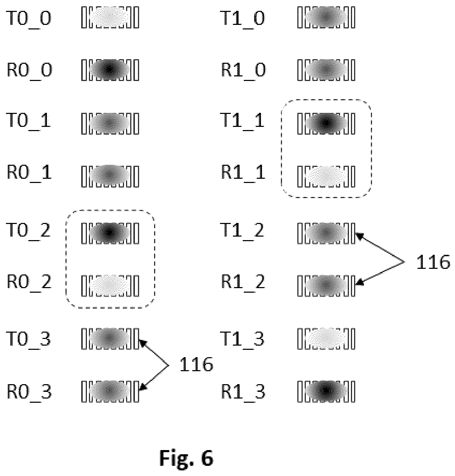

Selon un exemple de méthode, en lien avec la figure 6, une comparaison entre d'une part les $I_{m,t}^i$ et/ou les $I_{m,r}^i$ et d'autre part les $I_{r,t}^i$ et/ou les $I_{r,r}^i$ permettent d'établir une différence entre l'indice optique complexe du fluide d'intérêt et celui, connu, du fluide de référence, en se référant, par exemple, à un abaque.

En figure 6, la sortie de réfractomètre 155 comprend des réseaux de couplage 116. Le réfractomètre 10 comporte ici 4 sondes 1 dans le premier groupe de sondes et 4 sondes 1 dans le deuxième groupe. Les voies de sortie 152 en transmission sont référencées Tj_i. « j » est égal à 0, si la voie de sortie 152 est issue d'une sonde 1 du premier groupe, à 1, si la voie de sortie 152 est issue d'une sonde 1 du deuxième groupe. « i » est le rang de la sonde 1. De même, les voies de sortie 152 en réflexion sont référencées Rj_i. « j » est égal à 0, si la voie de sortie 152 est issue d'une sonde 1 du premier groupe, à 1, si la voie de sortie 152 est issue d'une sonde 1 du deuxième groupe. « i » est le rang de la sonde 1.

Les parties extraites des modes guidés transmis et réfléchis sont représentées sous la forme d'ellipses, d'un niveau de gris d'autant plus foncé que l'intensité est élevée. Ici, le contraste d'intensité le plus élevé entre modes transmis et réfléchi d'une même sonde est repéré pour chaque groupe de sondes (rectangles en ligne pointillée). Le décalage entre le repère du premier groupe (sonde de rang 2) et le repère du deuxième groupe (sonde de rang 1) est représentatif d'une différence entre les indices de réfraction du fluide d'intérêt et du fluide de référence. L'indice de réfraction du fluide de référence étant connu, il est possible de déterminer l'indice de réfraction du fluide d'intérêt.

Le repérage des contrastes d'intensité entre modes transmis et réfléchi peut se faire visuellement, sur une image numérique de la sortie de réfractomètre 155 captée par un imageur, ou, si la source lumineuse émet une lumière visible, à l'œil nu, éventuellement à l'aide d'un microscope. La même méthode peut être appliquée au repérage d'un maximum d'intensité des modes transmis, ou à un minimum d'intensité des modes réfléchis.

Plusieurs réfractomètre 10 peuvent être disposés sur une même plaque, ceci afin d'effectuer des mesures en parallèle.

Des modes de réalisation particuliers viennent d'être décrits. Différentes variantes et modifications apparaîtront à l'homme du métier. Par exemple, les sondes du premier groupe, et les cas échéant du deuxième groupe, peuvent avoir des interféromètres de Fabry-Pérot 120 identiques, la source lumineuse peut être large bande et le diviseur de puissance 130 peut être remplacé par un démultiplexeur de longueurs d'onde sur chacune de ses sorties.

**Revendications**

1. Sonde (1), comportant :

    • un guide planaire d'entrée (110) comprenant une première face (121a) de sortie et un guide planaire de sortie en transmission (111) comprenant une deuxième face (121b) d'entrée,

• une cavité Fabry-Pérot (121) configurée pour accueillir un fluide, et délimitée par la première face (121a) de sortie du guide planaire d'entrée (110), et par la deuxième face (121b) d'entrée du guide planaire de sortie en transmission (111),

• un guide planaire de sortie en réflexion (112) couplé optiquement au guide planaire d'entrée (110) par la cavité Fabry-Pérot (121), comportant un axe optique au niveau de la première face (121a) faisant un angle d'ouverture aigu avec un axe optique au niveau de la première face (121a) du guide planaire d'entrée (110),

• la cavité Fabry-Pérot (121) étant agencée de façon à ce qu'une normale à la première face (121a) constitue une bissectrice de l'angle d'ouverture.

2. Sonde (1) selon la revendication 1, dans laquelle le guide planaire de sortie en transmission (111) a un axe optique au niveau de la deuxième face (121b) parallèle à l'axe optique du guide planaire d'entrée (110),

3. Sonde (1) selon la revendication 2, l'axe optique du guide planaire de sortie en transmission (111) est contenu dans le même demi-plan ouvert délimité par l'axe optique du guide planaire d'entrée (110) que le guide planaire de sortie en réflexion (112).

4. Sonde (1) selon l'une quelconque des revendications 1 à 3, dans laquelle les guides planaires de sortie en transmission et en réflexion (111, 112) sont chacun couplés à un réseau de couplage (116).

5. Sonde (1) selon l'une quelconque des revendications précédentes comprenant en outre une paroi absorbante entre les guides planaires de sortie en transmission et en réflexion (111, 112).

6. Sonde (1) selon l'une quelconque des revendications précédentes, dans laquelle la première et/ou la deuxième face (121a, 121b) intègrent un élément de bio-reconnaissance.

7. Réfractomètre (1O) comportant

• un diviseur de puissance (130), et
• un premier groupe de sondes (1) selon l'une quelconque des revendications 1 à 6, couplées optiquement au diviseur de puissance (130), tel qu'au moins une sonde (1) a son angle d'ouverture ou une largeur de la cavité Fabry-Pérot (121) différents respectivement, de l'angle d'ouverture ou d'une largeur de la cavité Fabry-Pérot (121) d'une autre sonde (1).

8. Réfractomètre (10) selon la revendication 7, dans lequel les sondes (1) du premier groupe ont des angles d'ouverture égaux, et des largeurs de cavité Fabry-Pérot (121) différentes choisies parmi un ensemble ordonné de valeurs distinctes.

9. Réfractomètre (10) selon la revendication 7, dans lequel les sondes (1) du premier groupe ont des cavités Fabry-Pérot (121) de même largeur, et des angles d'ouverture différents choisis parmi un ensemble ordonné de valeurs distinctes.

10. Réfractomètre (10) selon l'un quelconque des revendications 7 à 9, comportant en outre un boîtier (200) comprenant un canal micro-fluidique d'intérêt (211) communiquant avec les cavités Fabry-Pérot (121) des sondes (1) du premier groupe.

11. Réfractomètre (10) selon l'une quelconque des revendications 7 à 10, comprenant en outre un deuxième groupe de sondes (1) couplées optiquement au diviseur de puissance (130), chaque sonde (1) du deuxième groupe étant identique à une sonde (1) du premier groupe.

12. Réfractomètre (10) selon les revendications 10 et 11, dans lequel le boîtier (200) comprend en outre un canal micro-fluidique de référence (212) communiquant avec les cavités Fabry-Pérot (121) des sondes du deuxième groupe.

13. Réfractomètre (10) selon l'une quelconque des revendications 7 à 12, dans lequel les guides planaires d'entrée, de sortie en transmission et de sortie en réflexion (110, 111, 112) sont en un matériau commun.

14. Réfractomètre (10) selon l'une quelconque des revendications précédentes comprenant en outre une voie de sortie (152) couplée optiquement à chaque guide planaire de sortie en transmission (111) et à chaque guide planaire de sortie en réflexion (112), les voies de sortie (152) ayant des extrémités alignées.

**15.** Utilisation d'un réfractomètre (10) selon l'une quelconque des revendications 7 à 14 pour mesurer un indice de réfraction et/ou une absorption d'un fluide d'intérêt, à l'aide d'une source de lumière couplée optiquement à une entrée du diviseur de puissance (130).

**16.** Utilisation selon la revendication 16, d'un réfractomètre (10) selon les revendications 9 et 13 pour lequel guides planaires d'entrée (110) ont la même largeur, utilisation pour laquelle l'ensemble ordonnée couvre au moins en partie la gamme comprise entre $1,8*\theta_c$ et $2,0*\theta_c$, où $\theta_c$ est l'angle minimal de réflexion totale des premières faces (121a) des guides planaires d'entrée (110).

**17.** Utilisation selon la revendication 16, pour laquelle la largeur des cavités Fabry-Pérot (121) est telle qu'un flux lumineux transmis issu de la source de lumière a une intensité dans un guide planaire de sortie en transmission (111) d'une sonde (1) dont l'angle d'ouverture n'est pas égal à une des bornes de l'ensemble ordonné de valeurs, strictement supérieure à son intensité dans tous les guides planaires de sortie en transmission (111) des autres sondes (1).

**18.** Utilisation selon les revendications 15 ou 16, d'un réfractomètre (10) selon la revendication 12 et 14, pour laquelle une mesure de l'indice de réfraction du fluide d'intérêt découle d'une constatation d'un décalage de la position d'un maximum et/ou d'un minimum d'intensité ou de contraste d'intensité entre les voies de sortie (152) premier groupe et les voies de sortie du deuxième groupe (152).

**Patentansprüche**

**1.** Sonde (1), die Folgendes aufweist:

• einen planaren Eingangsleiter (110), der eine erste Ausgangsseite (121a) umfasst, und einen planaren Transmissionsausgangsleiter (111), der eine zweite Eingangsseite (121b) umfasst,
• einen Fabry-Pérot-Hohlraum (121), der so ausgebildet ist, dass er ein Fluid aufnimmt, und durch die erste Ausgangsseite (121a) des planaren Eingangsleiters (110) und durch die zweite Eingangsseite (121b) des planaren Transmissionsausgangsleiters (111) begrenzt ist,
• einen durch den Fabry-Pérot-Hohlraum (121) optisch mit dem planaren Eingangsleiter (110) gekoppelten planaren Reflexionsausgangsleiter (112), der eine optische Achse an der ersten Seite (121a) aufweist, die mit einer optischen Achse an der ersten Seite (121a) des planaren Eingangsleiters (110) einen spitzen Öffnungswinkel bildet,
• wobei der Fabry-Pérot-Hohlraum (121) so eingerichtet ist, dass eine Normale zu der ersten Seite (121a) eine Winkelhalbierende des Öffnungswinkels bildet.

**2.** Sonde (1) nach Anspruch 1, wobei der planare Transmissionsausgangsleiter (111) eine optische Achse an der zweiten Seite (121b) aufweist, die zu der optischen Achse des planaren Eingangsleiters (110) parallel ist.

**3.** Sonde (1) nach Anspruch 2, wobei die optische Achse des planaren Transmissionsausgangsleiters (111) in derselben offenen Halbebene, die von der optischen Achse des planaren Eingangsleiters (110) begrenzt ist, wie der planare Reflexionsausgangsleiter (112) enthalten ist.

**4.** Sonde (1) nach einem der Ansprüche 1 bis 3, wobei der planare Transmissions- und der planare Reflexionsausgangsleiter (111, 112) jeweils mit einem Kopplungsnetz (116) gekoppelt sind.

**5.** Sonde (1) nach einem der vorstehenden Ansprüche, die weiter eine absorbierende Wand zwischen dem planaren Transmissions- und dem planaren Reflexionsausgangsleiter (111, 112) umfasst.

**6.** Sonde (1) nach einem der vorstehenden Ansprüche, wobei die erste und/oder die zweite Seite (121a, 121b) ein Bioerkennungselement beinhaltet.

**7.** Refraktometer (10), umfassend

• einen Leistungsteiler (130), und
• eine erste Gruppe von Sonden (1) nach einem der Ansprüche 1 bis 6, die optisch so mit dem Leistungsteiler (130) gekoppelt sind, dass sich der Öffnungswinkel oder eine Breite des Fabry-Pérot-Hohlraums (121) mindestens einer Sonde (1) von dem Öffnungswinkel bzw. einer Breite des Fabry-Pérot-Hohlraums (121) einer anderen Sonde (1) unterscheidet.

8. Refraktometer (10) nach Anspruch 7, wobei die Sonden (1) der ersten Gruppe gleiche Öffnungswinkel und unterschiedliche Breiten des Fabry-Pérot-Hohlraum (121) aufweisen, die aus einer geordneten Menge unterschiedlicher Werte ausgewählt sind.

9. Refraktometer (10) nach Anspruch 7, wobei die Sonden (1) der ersten Gruppe Fabry-Pérot-Hohlräume (121) mit derselben Breite und unterschiedliche Öffnungswinkel aufweisen, die aus einer geordneten Menge unterschiedlicher Werte ausgewählt sind.

10. Refraktometer (10) nach einem der Ansprüche 7 bis 9, das weiter ein Gehäuse (200) aufweist, das einen mikrofluidischen Kanal (211) von Interesse umfasst, der mit den Fabry-Pérot-Hohlräumen (121) der Sonden (1) der ersten Gruppe kommuniziert.

11. Refraktometer (10) nach einem der Ansprüche 7 bis 10, das weiter eine zweite Gruppe von Sonden (1) umfasst, die optisch mit dem Leistungsteiler (130) gekoppelt sind, wobei jede Sonde (1) der zweiten Gruppe mit einer Sonde (1) der ersten Gruppe identisch ist.

12. Refraktometer (10) nach den Ansprüchen 10 und 11, wobei das Gehäuse (200) weiter einen mikrofluidischen Referenzkanal (212) umfasst, der mit den Fabry-Pérot-Hohlräumen (121) der Sonden der zweiten Gruppe kommuniziert.

13. Refraktometer (10) nach einem der Ansprüche 7 bis 12, wobei der planare Eingangs-, der planare Transmissionsausgangs- und der planare Reflexionsausgangsleiter (110, 111, 112) aus einem gemeinsamen Material bestehen.

14. Refraktometer (10) nach einem der vorstehenden Ansprüche, das weiter einen Ausgangspfad (152) umfasst, der optisch mit jedem planaren Transmissionsausgangsleiter (111) und mit jedem planaren Reflexionsausgangsleiter (112) gekoppelt ist, wobei die Ausgangspfade (152) fluchtende Enden haben.

15. Verwendung eines Refraktometers (10) nach einem der Ansprüche 7 bis 14 zum Messen eines Brechungsindex und/oder einer Absorption eines Fluids von Interesse mit Hilfe einer Lichtquelle, die optisch mit einem Eingang des Leistungsteilers (130) gekoppelt ist.

16. Verwendung nach Anspruch 16 eines Refraktometers (10) nach den Ansprüchen 9 und 13, wobei die planaren Eingangsleiter (110) dieselbe Breite aufweisen, wobei bei der Verwendung die geordnete Menge mindestens zum Teil den Bereich zwischen $1{,}8*\theta_C$ und $2{,}0*\theta_C$ abdeckt, wobei $\theta_C$ der minimale Gesamtreflexionswinkel der ersten Seiten (121a) der planaren Eingangsleiter (110) ist.

17. Verwendung nach Anspruch 16, wobei die Breite der Fabry-Pérot-Hohlräume (121) so ist, dass ein von der Lichtquelle ausgehender transmittierter Lichtstrom eine Intensität in einem planaren Transmissionsausgangsleiter (111) einer Sonde (1), deren Öffnungswinkel ungleich einem der Grenzwerte der geordneten Wertemenge ist, aufweist, die strikt größer ist als ihre Intensität in allen planaren Transmissionsausgangsleitern (111) der anderen Sonden (1).

18. Verwendung nach den Ansprüchen 15 oder 16 eines Refraktometers (10) nach Anspruch 12 und 14, wobei eine Messung des Brechungsindex des Fluids von Interesse aus einer Feststellung einer Abweichung der Position eines Maximums und/oder eines Minimums der Intensität oder des Intensitätskontrasts zwischen den Ausgangspfaden (152) der ersten Gruppe und den Ausgangspfaden der zweiten Gruppe (152) resultiert.

## Claims

1. Sensor (1), including:

   • a planar entry guide (110) comprising a first exit face (121a) and a planar transmission exit guide (111) comprising a second entry face (121b),
   • a Fabry-Pérot cavity (121) configured to accommodate a fluid, and delimited by the first exit face (121a) of the planar entry guide (110) and by the second entry face (121b) of the planar transmission exit guide (111),
   • a planar reflection exit guide (112) optically coupled to the planar entry guide (110) by the Fabry-Pérot cavity (121), including an optical axis at the first face (121a) forming an acute opening angle with an optical axis at the first face (121a) of the planar entry guide (110),
• the Fabry-Pérot cavity (121) being arranged so that a normal to the first face (121a) constitutes a bisector of the opening angle.

2. Sensor (1) according to claim 1, wherein the planar transmission exit guide (111) has an optical axis at the second face (121b) parallel to the optical axis of the planar entry guide (110),

3. Sensor (1) according to claim 2, the optical axis of the planar transmission exit guide (111) is contained in the same open half-plane delimited by the optical axis of the planar entry guide (110) as the planar reflection exit guide (112).

4. Sensor (1) according to any one of claims 1 to 3, wherein the planar transmission and reflection exit guides (111, 112) are each coupled to a coupling grating (116).

5. Sensor (1) according to any one of the preceding claims, furthermore comprising an absorbent wall between the planar transmission and reflection exit guides (111, 112).

6. Sensor (1) according to any one of the preceding claims, wherein the first and/or the second face (121a, 121b) incorporate a biorecognition element.

7. Refractometer (10) including

   • a power divider (130), and
   • a first group of sensors (1) according to any one of claims 1 to 6, optically coupled to the power divider (130), such that at least one sensor (1) has its opening angle or a width of the Fabry-Pérot cavity (121) different respectively from the opening angle or from a width of the Fabry-Pérot cavity (121) of another sensor (1).

8. Refractometer (10) according to claim 7, wherein the sensors (1) in the first group have equal opening angles, and different widths of Fabry-Pérot cavity (121) selected from an ordered set of distinct values.

9. Refractometer (10) according to claim 7, wherein the sensors (1) in the first group have Fabry-Pérot cavities (121) with the same width, equal opening angles, and different opening angles selected from an ordered set of distinct values.

10. Refractometer (10) according to any one of claims 7 to 9, furthermore including a housing (200) comprising a microfluidic channel of interest (211) communicating with the Fabry-Pérot cavities (121) of the sensors (1) in the first group.

11. Refractometer (10) according to any one of claims 7 to 10, furthermore comprising a second group of sensors (1) optically coupled to the power divider (130), each sensor (1) in the second group being identical to a sensor (1) in the first group.

12. Refractometer (10) according to claims 10 and 11, wherein the housing (200) furthermore comprises a reference microfluidic channel (212) communicating with the Fabry-Pérot cavities (121) of the sensors in the second group.

13. Refractometer (10) according to any one of claims 7 to 12, wherein the planar entry, transmission exit and reflection exit guides (110, 111, 112) are made from a common material.

14. Refractometer (10) according to any one of the preceding claims, furthermore comprising an exit channel (152) optically coupled to each planar transmission exit guide (111) and to each planar reflection exit guide (112), the exit channels (152) having aligned ends.

15. Use of a refractometer (10) according to any one of claims 7 to 14, for measuring a refractive index and/or an absorption of a fluid of interest, by means of a light source optically coupled to an input of the power divider (130).

16. Use according to claim 16, of a refractometer (10) according to claims 9 and 13 for which planar entry guides (110) have the same width, use for which the ordered set at least partly covers the range between $1.8*\theta c$ and $2.0*\theta c$, where $\theta c$ is the minimum total reflection angle of the first faces (121a) of the planar entry guides (110).

17. Use according to claim 16, for which the width of the Fabry-Pérot cavities (121) is such that a transmitted light flow coming from the light source has an intensity in a planar transmission exit guide (111) of a sensor (1) the opening angle of which is not equal to one of the bounds of the ordered set of values, strictly greater than its intensity in all the planar transmission exit guides (111) of the other sensors (1).

18. Use according to claims 15 or 16, of a refractometer (10) according to claims 12 and 14, for which a measurement of the refractive index of the fluid of interest can result from noting a difference in the position of a maximum and/or minimum intensity or intensity contrast between the exit channels (152) of the first group and the exit channels of the second group (152).

**Fig. 1**

**Fig. 2**

**Fig. 3**

AA'

**Fig. 4A**

BB'

**Fig. 4B**

**Fig. 5A**

**Fig. 5B**

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009153844 A
- EP 3023767 A1
- KR 20110031766 A

**Littérature non-brevet citée dans la description**

- **YANGYANG CHEN et al.** Optical biosensors based on refractometric sensing schemes: A review. *Biosensors and Bioelectronics*, 2019, vol. 144, 111693